Europäisches Patentamt

European Patent Office

Office européen des brevets

(11) Publication number: **0 267 974 B1**

(19)

(12) EUROPEAN PATENT SPECIFICATION

(45) Date of publication of patent specification: **19.02.92**   (51) Int. Cl.⁵: **G06F 13/12**, G06F 13/28

(21) Application number: **86115749.3**

(22) Date of filing: **14.11.86**

(54) **Control interface for transferring data between a data processing unit and input/output devices.**

(43) Date of publication of application:
**25.05.88 Bulletin 88/21**

(45) Publication of the grant of the patent:
**19.02.92 Bulletin 92/08**

(84) Designated Contracting States:
**CH DE ES FR GB IT LI SE**

(56) References cited:
**EP-A- 0 134 115**
**FR-A- 2 440 058**
**GB-A- 2 039 102**

(73) Proprietor: **International Business Machines Corporation**
**Old Orchard Road**
**Armonk, N.Y. 10504(US)**

(72) Inventor: **Dutke, Karl-Heinz, Dipl.-Phys.**
**Silcherstrasse 220**
**W-7269 Deckenpfronn(DE)**
Inventor: **Gould, J.**
**5 Stofford Road Suite 8**
**Alliston, MA 02134(US)**
Inventor: **Perchik, J.**
**295 Harvard Street Apt. 607**
**Cambridge, MA 02139(US)**

(74) Representative: **Jost, Ottokarl, Dipl.-Ing.**
**Schönaicher Strasse 220**
**W-7030 Böblingen(DE)**

**Description**

The invention relates to a control interface for transferring data between a data processing unit architectured on the rules of the IBM System /370 (S/370) input/output architecture, and one or more input/output devices connected thereto.

In data processing systems there always exists the problem of speed-handling, when units having different operating and/or transmission speeds. In most systems, therefore, buffers are used which allow those units to co-operate asynchronously.

In UK Patent Application GB 2 039 102 A a buffer memory system is described which operates between two asynchronous functional units which may use different wordlengths to allow the simultaneous exchange of data between the buffer memory and a first functional unit, and between the buffer memory and a second functional unit. The buffer memory comprises two parts, where a first part is used for data passing from the first functional unit to the second, and the second part for data passing from the second functional unit to the first.

Each part comprises a write availability indicator read by the first and second functional units respectively and written into by the second and first functional units respectively and indicating the availability in the respective buffer parts of word locations in which data may be written, and a write indicator read by the second and first functional unit respectively and written into by the first and second functional units respectively and indicating in which word locations in the respective buffer parts words have been written.

As this approach uses buffer storage locations for operating on various indicators, operating speed is lost in wafer of handling those indicators.

A different approach is described in European Patent Application 0 134 115 A2. A communications interface for controlling asynchronous data transmission between a host computer and an input/output device achieves very high data transfer rates and reduces I/O speed degradation. The interface includes a micro processor and a memory addressable thereby. The microprocessor controls data transfer from the host computer into an output buffer maintained within the memory and controls subsequent data transfer from the output buffer to an output device independently of the operation of the host computer. Data received from the host computer is stored directly into the appropriate output buffer storage location without any time-consuming reading and writing of the data by the micro processor. This is accomplished by providing a hardware register for storing data received from the host computer. At the appropriate time data transfer from the micro processor to the memory is disabled and data transfer from the register to the memory is enabled. Data is thus rapidly transferred from the register directly into the memory location addressed by the microprocessor.

A wrap-around controlled memory is used for maintaining and houskeeping address pointers handling buffer operations. They are also used by the micro processor for avoiding buffer overflow. This solution seems to be very complex and for many applications to expensive.

Input/output (I/O) operations based on the IBM S/370 I/O architecture involve the transfer of information between the main storage of the central processing unit (CPU) and an I/O device which is connected to the CPU. I/O devices and their control units are attached to channels which control the information (data) transfer.

The channels direct the flow of information between the I/O devices and the main storage. They relieve the CPU of the task of communicating directly with the I/O devices and permit data processing to proceed concurrently with the I/O processing.

I/O devices are attached to the channel through control units. Their operation is controlled by a control unit. From a programming point of view most control unit functions are merged with I/O device functions.

I/O activities are initiated through IBM S/370 I/O instructions (Start I/O). Specific device activities are controlled by channel programs which are initiated via an I/O instruction. The channel which can be regarded as a special CPU executes these programs in parallel to the S/370 instruction processing. At the end of the channel program an interrupt is generated which provides information on the result of the executed program. The channel programs consist of channel command words (CCW's). The command part of the CCW is communicated from the channel to the control unit which performs the specific action. If data has to be transferred for the active CCW the control unit/device provides the data or demands them. The access to the storage for fetching or storing the data is fully controlled by the channel. The devices never see any S/370 storage addresses.

The CCW's allow data traffic in only one direction: Either inbound or outbound; so with one device either inbound or outbound traffic can be active at any point in time only.

In summary an IBM S/370 I/O operation includes a starting instruction (SIO), the execution of the associated channel program controlled by the channel together with the control unit and the device, and at least one ending interrupt when the channel program is completed.

I/O architectures very widely used in microprocessor environments are totally different. There exists a very close relationship between the I/O devices and the main memory of the CPU which allows the device to access the memory directly. The I/O device itself holds the data address and initiates data transfer between itself and the memory by using these addresses. This mechanism is widely known as direct memory access (DMA). It is a very efficient concept insofar as it minimizes interference with the CPU for executing I/O operations. Once the I/O device has the addresses it can initiate data transfers whenever required without needing further excitations or requests from the processing unit. So whereas the IBM /370 channel architecture provides for optimal protection of the memory the DMA concept is a very effective means for handling data transfer.

It is thus an object of the invention to provide an interface control which enables an IBM S/370 computer system to execute a continuously running data transfer in either directions, inbound and outbound, simultaneously at high speed and low costs.

This object of the invention is accomplished by the features of the main claim. Further advantageous embodiments and implementations are disclosed in the subclaims.

Generally speaking the control interface of the invention transposes the DMA concept into the IBM S/370 I/O architecture world. The memory space available for data transfer is provided to the I/O device by two continuously running control mechanisms, one for inbound and one for outbound traffic. These control mechanisms provide a series of buffers as specified by I/O control words (CCW's). Which buffers are actually available for data traffic is determined by pointers (indicator means). The buffers are implemented as a circular buffer pool and the pointers indicate which of the buffers are full and which are empty. The current pointer values are exchanged between the application which had called for a data transfer, and the device by means of a third continuouly running control mechanism. The pointers are changed and the changes are recognized by the I/O device by means of periodically sensing the exchanged control information. This mechanism can either sense the appropriate control information or it can use an interrupt mechanism for getting control after data transfer has been completed by the I/O device. The interrupt mechanism can be tuned by the application by specifying threshold values and setting timers. Three unshared I/O control mechanisms are used for these functions: Two for the inbound and outbound data port and one for the controlling port; a fourth I/O control mechanism is used to present interruptions if required.

By applying the features of the invention to an interface control unit the following advantages will be achieved:

Minimization of required I/O instructions and I/O interrupts, which leads to reductions in software path lengths controlling the I/O operations, and minimization of response times between the application performing the data transfer and the I/O device.

Minimization of software turn-around times by continuously running data traffic.

Direct control of the data traffic by the application program layers without requiring system interactions, as in the conventional IBM S/370 I/O.

A complete understanding of the present invention may be obtained by reference to the accompanying drawings, when taken in conjunction with the detailed description thereof and in which:

Fig. 1 is a block diagram illustrating the components of the control interface;

Fig. 2 represents a block diagram of the various data and control lines interconnecting the components of Fig. 1;

Fig. 3 is a block diagram illustrating the control interface when used for outbound data transfers;

Fig. 4 is a block diagram of the control interface when used for inbound data transfers;

Fig. 5 is a block diagram of an interrupt control unit and

Fig. 6a, b, c are signal diagrams with respect to time showing various control signals.

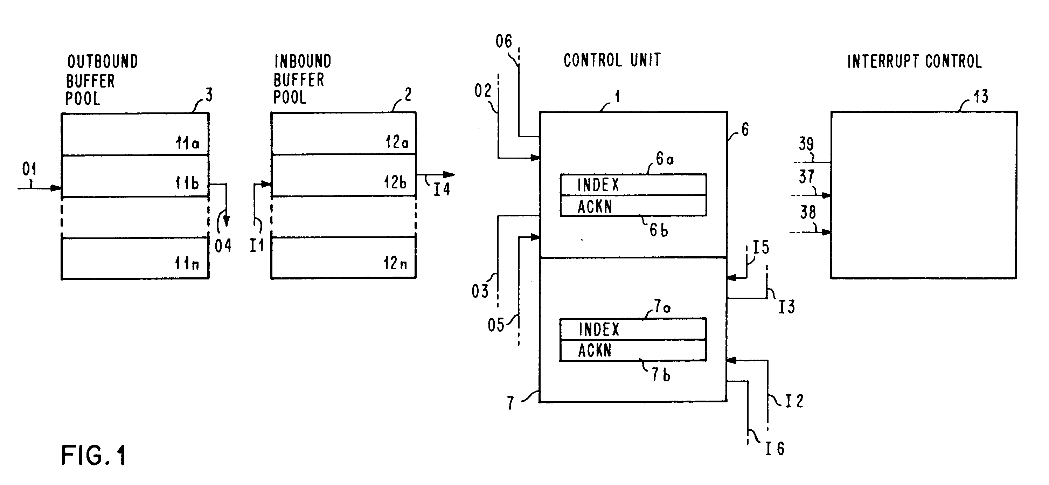

Figure 1 gives a survey over the essential parts of the control interface. There are two buffer pools, 2 and 3. Buffer pool 2 is used for data transfers from an input/output device 9 to an application 4, in the following called inbound buffers. The buffers 12a - 12n of the pool are ring-connected and addressed by normal address means 5 known from the art. The other buffer pool 3 is used for outbound data transfers from an application 4 to an input/output device 9, in the following called I/O device. The outbound buffers 11a - 11n are also ring-connected. Normal address means 5 are used to access the single buffers for loading and unloading the buffers of the outbound buffer pool.

During operation the housekeeping operations for controlling loading and unloading of the buffers is done by means of a control unit 1 which comprises two sets of pointers, the outbound pointers 6 and the inbound pointers 7, each consisting of an index pointer 6a, 7a and an acknowledgment pointer 6b, 7b. The index pointer 6a and the acknowledgment pointer 6b represent the outbound pointers 6 and the index

3

pointer 7a, and the acknowledgment pointer 7b represents the inbound pointers 7. The inbound pointers are used to indicate and control the states of the inbound buffers 2, the states of which can be either empty (free) or full. The outbound pointers 6 are used to indicate and control the states of the outbound buffers 3.

The pointers in the preferred embodiment of the invention are one byte values allowing a representation of 256 different values. Arithmetic operations performed with these values are done modulo 256, i.e. the update of the pointers, adding numbers of buffers loaded or unloaded and the comparison of the values. This modulo 256 arithmetic is used independently of the actual number of buffers provided by the application in the buffer pool. So a pointer value has no fixed relationship to a specific buffer, e.g. the first buffer can be identified by a pointer number 0, 5, 10 etc. if 5 buffers are used (MAX BUFFER = 5).

The I/O controller 8 does not need to know how many buffers are really used. It uses the next loaded or unloaded buffer as long as [INDEX]-[ACKN] > 0. The application has to make sure that only the really allocated number of buffers is used by never allowing [INDEX]-[ACKN] > [MAX BUFFER].

This scheme has the advantage that all buffers can be used as long as less than 256 buffers are used. In a scheme relating the pointer values to the real buffer numbers one buffer can not be used, e.g. not be loaded for outbound data traffic, because it must be clearly defined that [INDEX] = [ACKN] means all buffers are loaded or that all buffers are empty (there is one buffer state more than can be covered with the pointer values). In the modulo 256 scheme this ambiguity can be allowed as long as less than 256 buffers are used which is beyond all practical purpose.

Further, an interrupt control 13 is provided to give control to the application when to start data transfers again after all transfers have been completed.

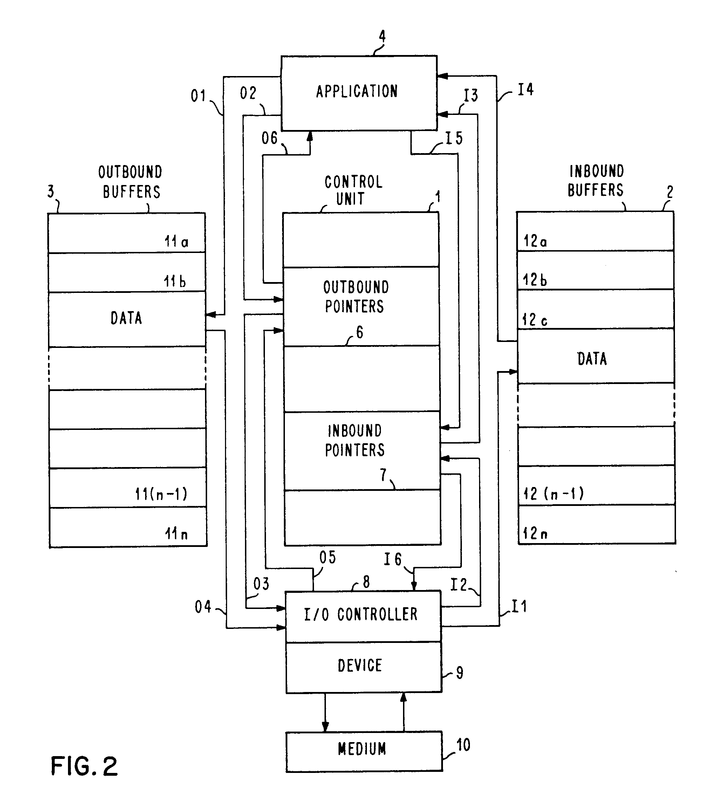

Referring now to Fig. 2 the interactions of the various system components will be described in connection with data and control lines connecting the system components to each other. Continuously running data transfers can be performed in either direction: From an application 4 to an I/O device 9, connected to a medium 10 or from an I/O device to an application. The outbound data traffic is routed via data line O1 (as can also be seen in Fig. 1) from an application 4 to the outbound buffers 3 and from there via data line O4 to an I/O controller 8, which is connected to an I/O device 9.

Inbound data traffic runs over data line I1 from an I/O controller 8 to the inbound buffer(s) 2 and from the inbound buffer(s) to an application 4 via data line I4.

For an outbound data transfer the application loads the next free buffer 11i within the outbound buffer pool 3, the address of which was generated by address means, being e.g. a part of the S/370 channel. The application 4 increases the index pointer 6a of the outbound pointers 6 by a certain value via control line O2. This new index pointer is transferred via control line O3 to the I/O controller 8. This change of the outbound index pointer 6a is detected by the I/O controller 8. As a consequence the I/O controller starts the transfer of the outbound data temporarily stored in the outbound buffer(s) 3 to the I/O controller via data line O4.

Further, the I/O controller 8 increases the acknowledgment pointer 6b of the outbound pointers 6 by the same specific amount via control line O5, and the new acknowledgment pointer 6b is transmitted via control line O6 to the application 4 which indicates that the buffer(s) used for the outbound data transfer can be re-used.

For a data transfer in the opposite direction (inbound data traffic) the I/O controller 8 transfers inbound data to the next free buffer 12i of the inbound buffer pool 2 ata line I1 and increases the acknowledgment pointer 7b of the inbound pointers 7 via control line I2. The new acknowledgment pointer 7b is transferred to the application 4 via control line I3.

The application 4 detects this change from the old value of the pointer to the new one and starts the inbound data transfer from the used inbound buffer 12i of the inbound buffers 2 to the application 4 via data line I4. The application increases the inbound pointer, in this case the index pointer and transfers the new value on line I5 to the inbound pointer, which is the index pointer 7a. This indicates that the previously used buffer is now free for being used again.

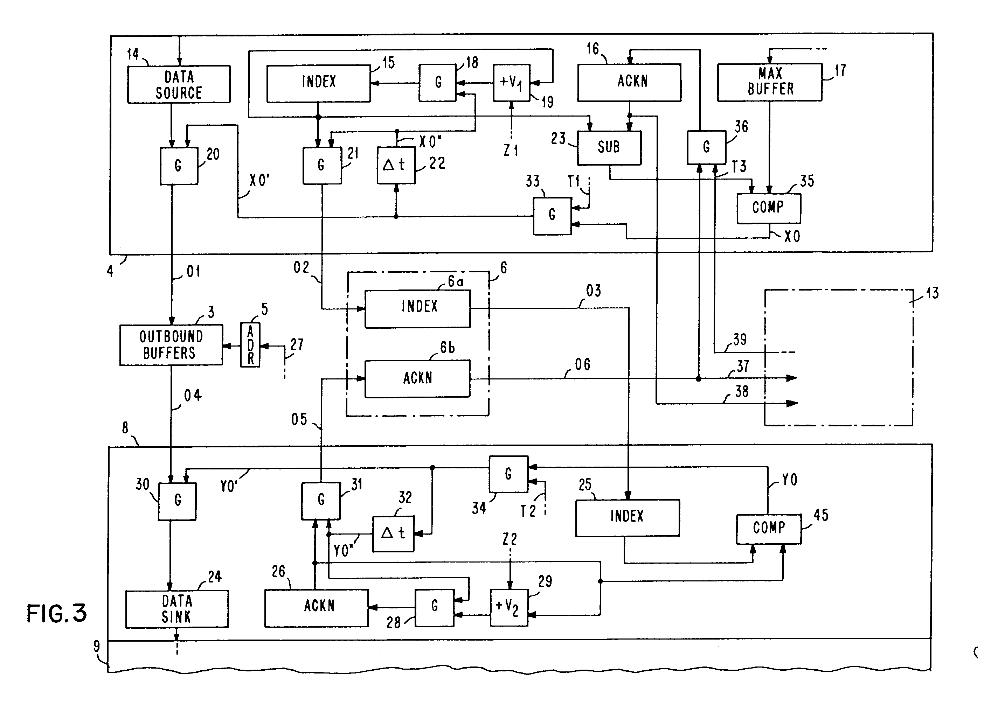

The operations roughly described above will now be explained with more detail in conncection with Figs. 3, 4, 6a and 6b. Starting again with describing outbound data transfers Fig. 3 shows in greater detail the various components of the application 4 and of the I/O controller 8. The outbound data traffic in this example will transfer data from a data source 14 to one or more of the outbound buffer(s) 3 to a data sink 24 within the I/O controller 8. The data source and data sink can be of a different nature, e.g. they can be registers or storage areas representing fields in a piece of software used for data transmission operations.

The data flow is controlled by transmission gates (G) 20 and 30. The next free outbound buffer is already selected by the address means 5 which are controlled via control line 27 by the channel of the system which is not represented in the drawings or it can be controlled by any other known suitable control means. A data transmission from the data source 14 to the next free buffer is determined by control signals

4

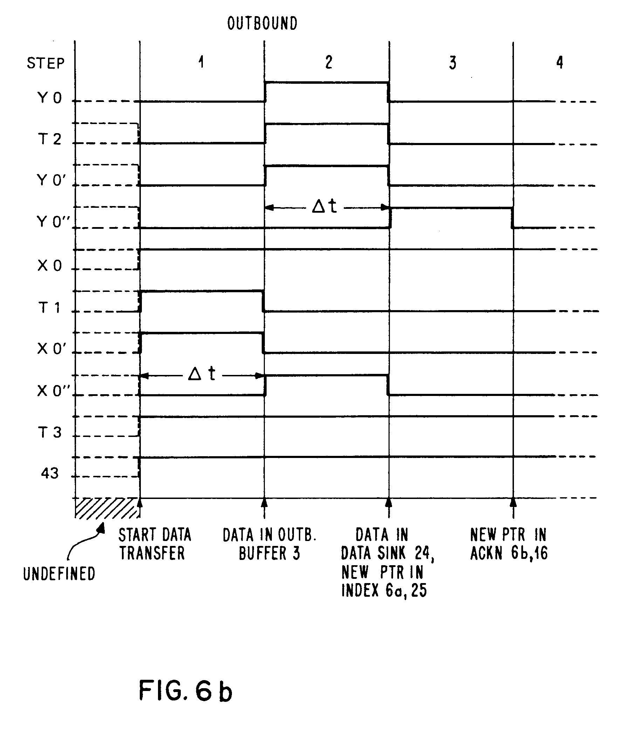

T1, X0' (see Fig. 6b). Control signal X0 from which XO' is derived will be generated everytime when the following condition is satisfied:

$$X0 \triangleq ([INDEX] - [ACKN]) < [MAX\ BUFFER],$$

where MAX BUFFER is the number of buffers used within buffer pool 3.

This means that control signal X0 is generated everytime when the difference between the contents of the index field 15 and the acknowledgment field 16 is smaller than the contents of the MAX-BUFFER field 17. The index field 15 holds an image (duplicate) of the index pointer 6a and the acknowledgment field 16 contains an image of the acknowledgment pointer 6b.

Since at the beginning of a data transfer operation the above condition is met because the difference [INDEX] - [ACKN] is smaller than the contents of MAX BUFFER 17 control signal XO is transferred to a transmission gate 33 which generates the derived control signal XO'. The transmission gate 33 is controlled by a control signal T1 which can be regarded as an initial start signal for an outbound data transfer (as can also be seen from Fig. 6b). The control signal X0' activates the transmission gate 20 to let the data pass from the data source to the outbound buffer(s).

The control signal X0' has two further effects:

1. The control signal XO', delayed by $\Delta t$ in delay element 22 is applied to a transmission gate 18 to transfer the index pointer incremented by the value V1 by an incrementor 19 into the index field 15.

2. The delayed control signal, designated XO" is also applied to a transmission gate 21 which transmits the incremented index value via control line O2 to the index pointer 6a of the outbound pointers 6.

At the same time the new index pointer 6a is transferred via control line O3 to an index field 25 within the I/O controller 8. The comparator 45 in the I/O controller detects that the contents of the index field 25 and of the acknowledgment field 26 which had the same value before the data transfer from the data source to the outbound buffer was started, have now different values. This results in the generation of the control signal Y0. Control signal YO is transferred to a further transmission gate 34 which generates the control signal YO'. This transmission gate is controlled by a control signal T2. The control signal YO' controls transmission gate 30. The data in the outbound buffer(s) which are transferred to the data line O4 are passed from the buffer(s) 3 to the data sink 24.

Similar to the application 4 a control signal YO" which is derived from control signal YO' by a delay element 32 having a delay of $\Delta t$ has also to perform two further functions:

1. To increment the value in the acknowledgment field 26 by an amount of V2, performed by an incrementor 29 and a transmission gate 28 which in turn feeds the updated acknowledgment pointer back into the acknowledgment field 26.

2. Control signal YO" is transferred also to a transmission gate 31 which transmits the new acknowledgment pointer via control line O5 to the acknowledgment pointer 6b of the outbound pointers 6.

At the same time the new acknowledgment pointer is transmitted over control line O6 to the acknowledgment field 16 within the application 4. On its way to the acknowledgment field 16 the acknowledgment pointer has to pass transmission gate 36 which only in an interrupt situation is blocked by a control signal T3 from interrupt control 13. The conditions for an interrupt situation will be discussed later in the description.

By this last operation the outbound data transfer cycle is completed.

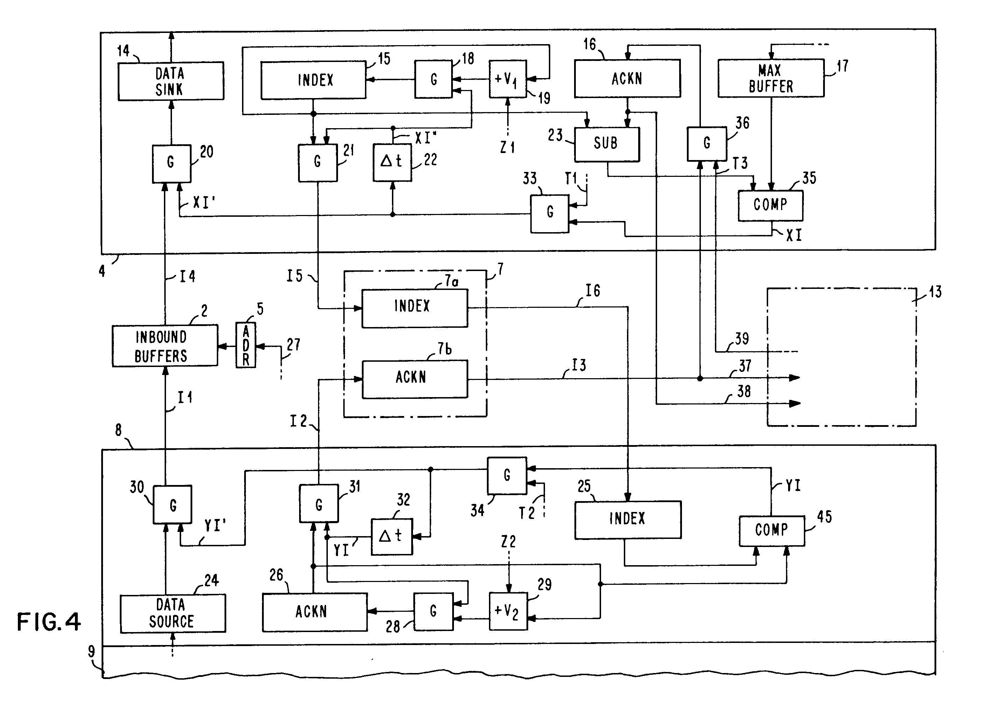

The inbound data traffic ( Fig. 4) which can be understood as a data transfer from a data source 24 within the I/O controller 8 to a data sink 14 within an application 4 is again controlled by the operation cycle of a pair of pointers, in this case the index pointer 7a and the acknowledgment pointer 7b within the inbound pointers 7. At the beginning of the transfer operation the values or contents of the index pointer 7a and its duplicates are [ACKN] + [MAX BUFFER]. The values of the acknowledgement pointer 7b and its dupplicates however, are [ACKN].

When a data transfer is required transmission gate 30 allows the flow of data from the data source 24 to one or more of the inbound buffers 2, the address of which is set by address means 5.

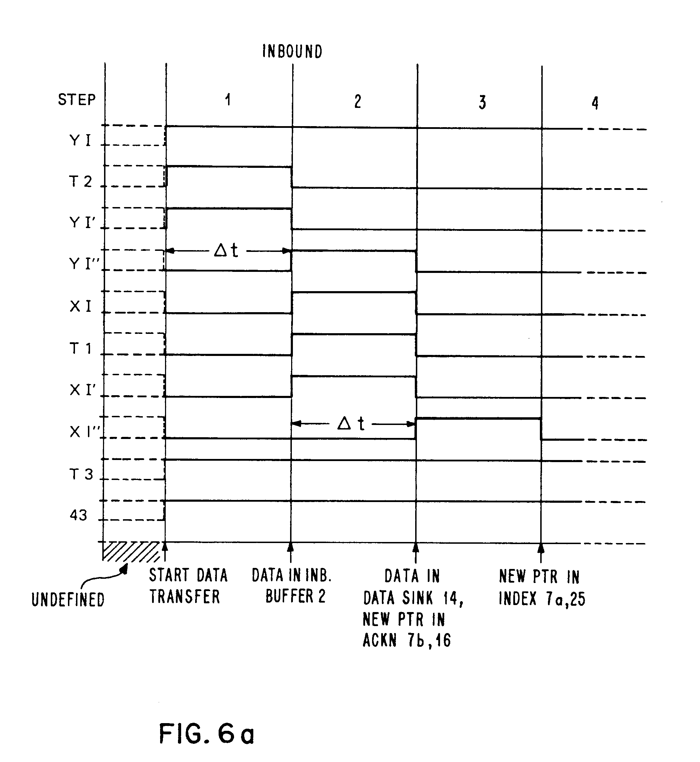

The transmission gate 30 was enabled by a control signal YI' which was transmitted from the comparator 45 via a transmission gate 34 controlled by control signal T2. The new acknowledgment pointer, increased by the value V2 will be transferred again from the acknowledgment field 26 via transmission gate 31 and control line I2 to the acknowledgment pointer 7b and via the control line I3 to the acknowledgment field 16 (see Fig. 4 and 6a).

The value change of the acknowledgment pointer will be detected within the application 4, and the control signal XI is generated by the components 15, 16, 23, 17 und 35. The transmission gate 33, controlled by control signal T1 applies a control signal XI' to the transmission gate 20 so that the data bound to data sink 14 can be transferred from the inbound buffer(s) 2 via data line l4 to the data sink 14. Delayed by $\Delta t$, the index value in the index field 15 is increased and transmitted via transmission gate 21 and over control line l5 to the index pointer 7a within the inbound pointers 7. The new index pointer is finally transmitted over control line l6 to the index field 25 within the I/O controller 8.

The following Table 1 gives an example of changes of the pointer values in the index pointer field 15 and acknowledgment pointer field 16 in the application 4 for an outbound data traffic where the maximum number of buffers provided is 3 ( [MAX BUFFER] = 3 ).

(Time vector from left to right.)

TABLE 1

| a) Loading of Buffers | No Buffer full | 1 Buffer full (11a) | 2 Buffers full (11a,b) | 3 Buffers full (11a,b,c) |
|---|---|---|---|---|
| [INDEX] (15) | 21 | 22 | 23 | 24 ... |
| [ACKN] (16) | 21 | 21 | 21 | 21 ... |

| b) Unloading of Buffers | No Buffer empty ($\hat{=}$ all Buffers are full) | 1 Buffer empty (11a) | 2 Buffers empty (11b) | 3 Buffers empty (11c) |
|---|---|---|---|---|
| [INDEX] (15) | 24 | 24 | 24 | 24 ... |
| [ACKN] (16) | 21 | 22 | 23 | 24 ... |

| c) Loading and Unloading of Buffers | 2 Buffers full (11a, b) 1 Buffer empty | 1 Buffer loaded (11c) 2 Buffers unloaded (11a,b) | 2 Buffers loaded (11a, b) 1 Buffer unloaded (11c) | |
|---|---|---|---|---|
| [INDEX] (15) | 24 | 25 | 26 | 27 |
| [ACKN] (16) | 22 | 24 | 25 | 25 |

Example a) shows how the three outbound buffers 11a-c are loaded and how the values of the pointers in the index field 15 and acknowledgment field 16 are changed during this operation. At the beginning all three buffers are free and both pointer values equal 21. In the first transfer step buffer 11a is loaded and the value of the index pointer is increased by the value V1 = 1. The new value of the pointer in the index field 15 is 22. The value of the pointer in the acknowledgment field 16 remains unchanged. When the next free buffer 11b is loaded, the value in the index pointer field 15 is increased again by 1. Its contents is now 23. The value in the acknowledgment field 16 again remains unchanged. With the last step of this example the

7

last buffer 11c is loaded and again the value in the index field 15 is increased by 1 resulting in the final value 24. The value in the acknowledgment field 16 remains unchanged as in the previous two steps because there were no data transfers from the outbound buffers to the I/O controller 8, and only such transfers would result in a value increase of the acknowledgment pointer in the acknowledgment field 16.

The example b) shows the unloading of the buffers 11a-c. At the beginning of the unloading operation all 3 buffers are full. The pointer values in the index field 15 and the acknowledgment field 16 have the same values as they had after completion of step 3 in the preceding example, which means that the contents of the index field 15 is 24 and the one in the acknowledgment field 16 is 21. During the first step one buffer (11 a) is unloaded, which results in an increase of the value in the acknowledgment field by an amount V2 = 1 giving a total value of 22. The value in the index field 15 remains unchanged, i.e. 24.

During the second step the next buffer (11b) is unloaded and the value in the acknowledgment field 16 is again increased by 1 resulting in a total of 23. After completion of the third step by which the last buffer (11c) had been unloaded the values in the index field 15 and the acknowledgment field 16 equal 24, which means that after a full outbound data transfer cycle the index field 15 and the acknowledgment field 16 hold the same value. This is the same situation as at the beginning of an outbound data transfer cycle, with the difference that the values at the beginning and at the end differ from each other in most cases. This difference equals the number [MAX BUFFER] of buffers used at most.

Example c) illustrates a mode of operation where loading and unloading take place simultaneously. It is assumed that at the beginning two buffers (11a,b) are loaded and one buffer is empty (11c). Accordingly, the value in the index field 15 is 24 and the one in the acknowledgment field 16 is 22. During the first step the free buffer (11c) is loaded and the 2 loaded buffers (11a,b) are unloaded. This results in the pointer values 25 in the index field 15 and 24 in the acknowledgment field 16. During the next step the now free buffers (11a,b) are loaded again and the full buffer (11c) is unloaded. Accordingly, the value in the index field 15 is 26 and in the acknowledgment field 16 it is 25.

Inbound data transfer operations are carried out in a very similar way.

With respect to an application 4, the following Table 2 shows the conditions under which the control signal XO for outbound data transfers and the control signal XI for inbound data transfer operations will be generated.

TABLE 2

Application 4

| Outbound Pointers 6 | ( [INDEX] – [ACKN] ) < [MAX BUFFER] Buffers free = XO |
|---|---|
| Inbound Pointers 7 | ( [INDEX] – [ACKN] ) < [MAX BUFFER] Buffers full ≙ XI |

Similar to Table 2 Table 3 shows with respect to an I/O controller 8 the conditions under which the control signal YO for outbound data transfers and the control signal YI for inbound data transfer operations are generated.

TABLE 3

I/0 Controller 8

| Outbound | [INDEX] > [ACKN] |
| Pointers 6 | Buffers full ≙ YO |

| Inbound | [INDEX] > [ACKN] |
| Pointers 7 | Buffers free ≙ X1 |

In general, interrupt situations may arise when the value in the acknowledgment field 26 (7b) (Fig. 4) is getting out of synchronism with the value of the acknowledgment field 16, which is possible in cases when the application 4 is not running, e.g. when there are no requests for data transfers. For these situations an interrupt control 13 is provided to the control interface.

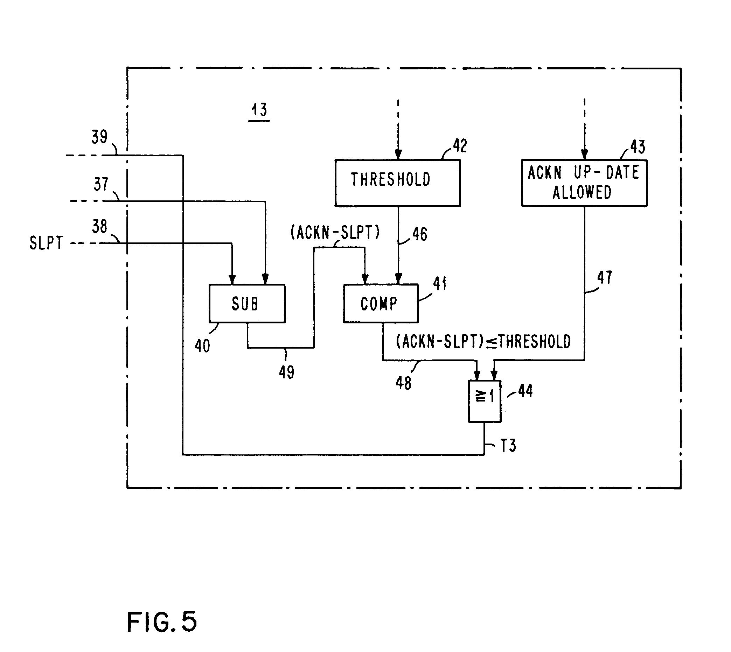

Fig. 5 shows a block representation of the interface control unit 13, comprising a subtractor 40, a comparator 41, a register or data field 42 for storing a threshold value, a further register or data field 43 for storing a 1-bit information on whether or not an acknowledgment pointer update is allowed and an OR gate 44 generating at its output the control signal T3.

When the transmission gate 36 in Fig. 4 is blocked, the value in the acknowledgment field 16 cannot be updated which means in other words that the acknowledgment value or acknowledgment pointer is "sleeping". The sleeping pointer SLPT is transferred via line 38 to subtractor 40. The other value, the acknowledgement pointer from the acknowledgment field 26 (7b) is transferred over line 37 to another input of subtractor 40. The difference of the two pointers is available on line 49 connected to comparator 41. The other input value for the comparator 41 is from threshold field 42 via line 46. The output of the comparator is a one bit signal which indicates, when on, that ([ACKN] - [SLPT]) ≧ [THRESHOLD]. In this case OR gate 44 generates the control signal T3. When this condition is not met, comparator 41 generates a zero bit which is also transmitted on line 48 to the OR gate 44 which turns off control signal T3.

Software interrupts are initiated by the ACKN UPDATE ALLOWED field 43 which is loaded by the system software. As long as an acknowledgment pointer update is allowed the ACKN UPDATE ALLOWED field 43 contains a binary 1 bit which is transferred to OR gate 44 via line 47. This turns OR gate 44 on, irrespective of whether or not the above condition of comparator 41 is met. So control signal T3 is on again.

When a zero is loaded into the ACKN UPDATE ALLOWED field 43 OR gate 44 is turned off. When at the same time the said condition is not met, control signal T3 is turned off.

TABLE 4

[MAX BUFFER]    = 3

[THRESHOLD]     = 2

$\begin{bmatrix} \text{ACKN UP DATE} \\ \text{ALLOWED} \end{bmatrix} = 0$

|  | All Buffers empty (12a,b,c) | 1 Buffer loaded (12a) Threshold not reached | 2 Buffers loaded (12a,b), Threshold reached | |
|---|---|---|---|---|
| [INDEX] (15) | 33 | 33 | 33 | |
| SLPT] $\hat{=}$ [ACKN] (16) | 30 | 30 | 30 | 32 |
| [ACKN] (26) | 30 | 31 | 32 | |

The above table 4 shows pointer values for an inbound traffic example where the ACKN UPDATE ALLOWED field 43 contains a binary 0, the value of [MAX BUFFER] is three, and [THRESHOLD] is 2.

At the beginning it is assumed that all buffers (12a,b,c) are empty. The index field 15 contains a value of 33, the acknowledgment field 16, which will contain the sleeping pointer SLPT holds a value of 30 and the acknowledgment field 26 contains 30. In the first step the first buffer (12a) will be loaded whilst the threshold is not yet reached. The index field will hold 33, the sleeping pointer 30 and the acknowledgment field 31.

During the next step two buffers (12a,b) are loaded and now the threshold is reached: the index field again remains unchanged; the same is true for the index pointer and only the value in the acknowledgment field 26 is increased by 1. Now an interrupt condition is satisfied and T3 will be unblocked. This initiates an update of ACKN (16) which in turn initiates the data transfer from the inbound buffer (2) to the data sink (14) as described before.

The treshold values may differ between inbound and outbound data transfer operations. A characteristic value for inbound data transfer operations is 1, but it can also be any random value between zero and MAX BUFFER. The characteristic threshold value for outbound data transfer operations should be MAX BUFFER -1.

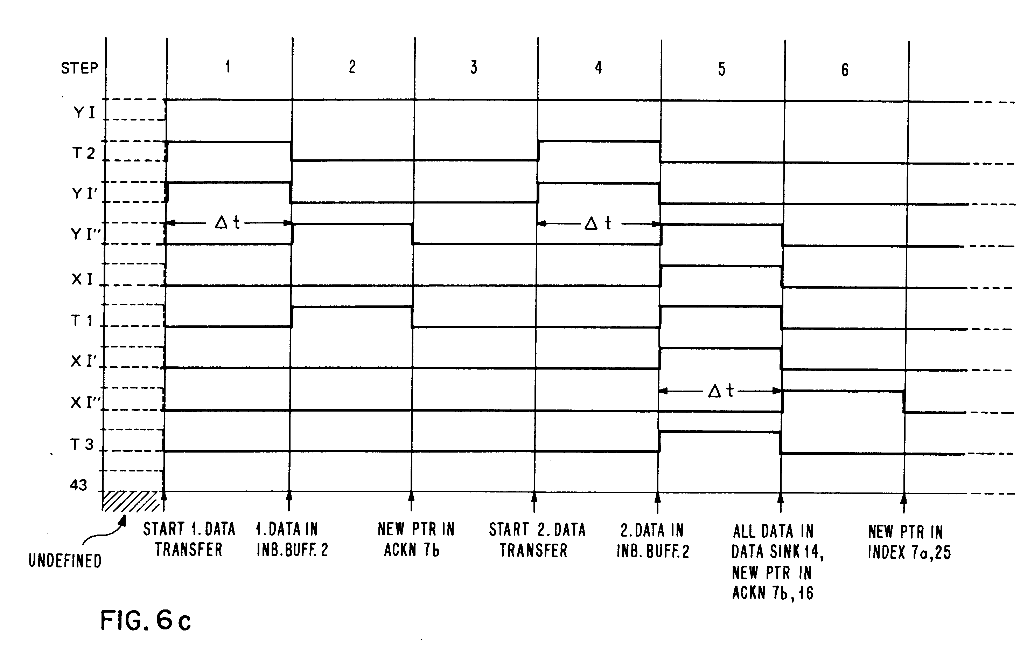

Referring now to Figures 4 and 6c the previously described example will now be explained in detail. Initiated by T2 a first data transfer from the data source 24 to the first inbound buffer 12a is started. During step 1 this first data transfer is performed. At the beginning of the next step the first data are in inbound buffer 12a.

During the second step the new acknowledgment pointer is updated and transferred to 7b. Nothing happens in the third step because T3 is in the off state. Caused by control signal T2 the second data transfer to the inbound buffer is initiated and completed at the end of step 4. At the end of step 5 all the data are in the data sink 14 and the new pointer is in the acknowledgment field 16. At the end of the sixth step the index field 25 finally holds the new index pointer and a new inbound data transfer cycle could be started.

The inbound and outbound data transfer mechanisms can run at the same time (full duplex) when the control interface components represented in Figs. 3 and 4 are provided twice in parallel.

**Claims**

1. Control interface for transferring data between a data processing unit and at least one input/output (I/O) device (9), with an input/output (I/O) controller (8) connecting the I/O devices to the interface, a first pool (2) of buffers (11a-n) for buffering data transferred from an I/O device to an application (4), and a second pool (3) of buffers (12a-n) for buffering data transferred from an application to an I/O device, comprising

a control unit (1) having outbound pointer means (6) for controlling the outbound data transfer from an application to an I/O device, and inbound pointer means (7) for controlling an inbound data transfer from an I/O device to an application, each comprising an index pointer [INDEX] (6a, 7a) and an acknowledgement pointer [ACKN] (6b, 7b), where the index pointers can only be changed by an application (4) and the acknowledgement pointers only by an I/O controller (8).

in said application (4) first index means (15) reflecting the value [INDEX] of the index pointer (6a, 7a) and first acknowledgement means (16) are provided reflecting the value [ACKN] of the acknowledgment pointer (6b, 7b), and storage means (17) containing a number MAX BUFFER which equals the maximum number of buffers which may be used within the first or second pool (2, 3) of buffers,

in said I/O controller (8) second index means (25) reflecting the value of the index pointer (6a, 7a) and second acknowledgement means (26) reflecting the value of the acknowledgment pointer (6b, 7b),

means (15-19, 21-23, 33, 35) within the application for changing the value of the index pointer in accordance with the number of buffers used for data transfers and for detecting these changes for deriving an inbound control signal XI, allowing the inbound, and an outbound control signal XO allowing the outbound data transfers, between the application and the respective first or second pool of buffers when the following conditions performed in modulo N arithmetic are met :

XO when ([INDEX] - [ACKN]) < [MAX BUFFER]
XI when ([INDEX] - [ACKN]) < [MAX BUFFER]

means (25, 26, 28, 29, 31, 32, 34, 45) within the I/O controller for changing the value of the acknowledgment pointer in accordance with the number of buffers used for data transfers and for detecting these changes for deriving an inbound control signal YI allowing the inbound and an outbound control signal YO allowing the outbound data transfers between the I/O controller and the respective first and second pool of buffers when following other conditions performed in modulo N arithmetic are met :

YO when [INDEX] > [ACKN] (pointers 6)
YI when [INDEX] > [ACKN] (pointers 7)

and to interrupt inbound and/or outbound data transfers if these conditions are not met.

2. Control interface in accordance with claim 1 , wherein said changes are made by incrementing the index pointer value (INDEX) by a specific amount (V1) and the acknowledgment pointer value (ACKN) by a specific amount (V2) which can be equal to or different from the first named specific amount.

3. Control interface in accordance with claim 1 and/or 2 wherein an interrupt control (13) is provided which comprises first arithmetic means (40) for forming the difference between said acknowledgement pointer (6b, 7b) and the acknowledgement pointer value in said first acknowledgement means (16) which can be regarded as a " sleeping pointer" as being not updated due to missing data transfer operations of the I/O controller, said difference being compared by second logic means (41) with a threshold value in threshold means (42) generating an interrupt control signal (T3) if the following condition is satisfied:

([ACKN]-[SLPT]) ≤ [THRESHOLD],

said interrupt control signal being alternatively generated when an acknowledgement update allowed information contained in ackn update allowed means (43) is dropped.

4. Control interface in accordance with one or more of the preceding claims where in said application (4) a fifth transmission gate (36) is provided which is controlled by said interrupt control signal (T3) which,

EP 0 267 974 B1

when blocked, does not allow an update of the acknowledgement pointer contained in said first acknowledgement means (16) by the acknowledgement pointer (6b, 7b).

5. Control interface in accordance with one or more of the preceding claims wherein data transfers between said application (4) and said inbound (outbound buffers) (2, 3) are controlled by a first transmission gate (20) within the application and wherein data transfers between said I/O controller (8) and said buffers are controlled by a second transmission gate (30) within the I/O controller.

6. Control interface in accordance with one or more of the preceding claims wherein for outbound data transfer operations said means within the application and said means within the I/O controller comprise the following :

1. means dependent on said first outbound control signal (XO) to transfer the outbound data from a data source (14) within said application (4) to said outbound buffers (3) via said first transmission gate (20) and a first data line (O1),
2. means in the application to increment the value INDEX of the index pointer in the first index means (15) by a specific amount (V1) and to transfer the new value via a third transmission gate (21) and a first control line (O2) to the index pointer (6a) within the outbound pointers (6) and from there via a second control line (O3) to said second index means (25) within said I/O controller (8),
3. means dependent on said second outbound control signal (YO) to transfer the outbound data from said outbound buffers via a second data line (O4) and said second transmission gate (30) to a data sink (24) within said I/O controller (8),

7. Control interface in accordance with one or more of the preceding claims wherein for inbound data transfer operations said means within the application and said means within the I/O controller comprise the following :

1. means dependent on said second inbound control signal (YI) to transfer the inbound data from a data source (24) within said I/O controller (8) to said inbound buffers (2) via said second transmission gate (30) and a third data line (11),
2. means in the I/O controller to increment the value [ACKN] of the acknowledgement pointer in the second acknowledgement means (26) by a specific amount (V2) and to transfer the new value via a fourth transmission gate (31) and a third control line (12) to the acknowledgement pointer (7b) within the inbound pointers (7) and from there via a fourth control line (13) and said fifth transmission gate (36) to said second acknowledgement means (16) within said application (4),
3. means dependent on said second inbound control signal (YI) to transfer the inbound data from said inbound buffers via a fourth data line (14) and said first transmission gate (20) to a data sink (14) within said application (4),

8. Control interface in accordance with claims or wherein for full duplex data transfer the means of the claims 6 and 7 operate in parallel in each of two sets of said data transfer mechanisms (of Figs. 3 and 4).

**Revendications**

1. Interface de commande pour le transfert de données entre une unité de traitement de données et au moins un dispositif d'entrée/sortie (E/S) (9), avec un contrôleur (8) d'entrée/sortie (E/S) connectant les dispositifs E/S à l'interface, un premier groupe (2) de tampons (11a-n) pour mettre en tampon les données transférées d'un dispositif E/S à une application (4), et un deuxième groupe (3) de tampons (12a-n) pour mettre en tampon les données transférées d'une application à un dispositif E/S, comprenant

une unité de commande (1) comportant des moyens de pointeurs de sortie (6), pour commander le transfert de données de sortie d'une application à un dispositif E/S, et des moyens de pointeurs d'entrée (7) pour commander un transfert de données d'entrée d'un dispositif E/S à une application, comprenant chacun un pointeur d'index [INDEX] (6a,7a) et un pointeur d'accusé de réception [ACKN] (6b,7b), les pointeurs d'index pouvant seulement être changés par l'application (4) et les pointeurs d'accusé de réception pouvant seulement être changés par un contrôleur E/S (8) ; dans ladite application (4), des premiers moyens d'index (15) reflétant la valeur [INDEX] du

12

pointeur d'index (6a,7a) et des premiers moyens d'accusé de réception (16) reflétant la valeur [ACKN] du pointeur d'accusé de réception (6b,7b), et des moyens de stockage (17) contenant un nombre MAX TAMPON qui est égal au nombre maximal de tampons qui peuvent être utilisés dans le premier ou le deuxième groupe (2,3) de tampons ;

dans ledit contrôleur E/S (8), des deuxièmes moyens d'index (25) reflétant la valeur du pointeur d'index (6a,7a) et des deuxièmes moyens d'accusé de réception (26) reflétant la valeur du pointeur d'accusé de réception (6b,7b) ;

des moyens (15-19, 21-23, 33, 35) à l'intérieur de l'application pour changer la valeur du pointeur d'index conformément au nombre de tampons utilisés pour les transferts de données et pour détecter ces changements afin de produire un signal de commande d'entrée XI permettant les transferts de données d'entrée et un signal de commande de sortie XO permettant les transferts de données de sortie entre l'application et le premier ou le deuxième groupe de tampons respectivement lorsque les conditions suivantes sont remplies :

XO lorsque ([INDEX] - [ACKN]) < [MAX TAMPON]

XI lorsque ([INDEX] - [ACKN]) < [MAX TAMPON]

et des moyens (25,26,28,29,31,32,34,45) prévus dans le contrôleur E/S pour changer la valeur du pointeur d'accusé de réception conformément au nombre de tampons utilisés pour les transferts de données et pour détecter ces changements afin de produire un signal de commande d'entrée YI, permettant les transferts de données d'entrée, et un signal de commande de sortie YO permettant les transferts de données de sortie entre le contrôleur E/S et les premier et deuxième groupes de tampons respectivement lorsque les autres conditions suivantes, exécutées en arithmétique modulo N, sont remplies :

YO lorsque [INDEX]> [ACKN] (pointeurs 6)

YI lorsque [INDEX]> [ACKN] (pointeurs 7)

et pour interrompre les transferts de données d'entrée et/ou de sortie si ces conditions ne sont pas remplies.

2.  Interface de commande suivant la revendication 1, dans laquelle lesdits changements sont effectués par incrémentation de la valeur de pointeur d'index (INDEX), d'une quantité spécifique (V1), et de la valeur de pointeur d'accusé de réception (ACKN) d'une quantité spécifique (V2) qui peut être égale à la qualité spécifique citée en premier ou différente de celle-ci.

3.  Interface de commande suivant la revendication 1 et/ou 2, dans laquelle est prévue une commande d'interruption (13) qui comprend des premiers moyens arithmétiques (40) pour former la différence entre le dit pointeur d'accusé de réception (6b,7b) et la valeur de pointeur d'accusé de réception dans lesdits premiers moyens d' accusé de réception (16) qui peut être considérée comme un "pointeur en sommeil" puisque n'étant pas mise à jour du fait des opérations de transfert de données manquantes du contrôleur E/S, ladite différence étant comparée par des deuxièmes moyens logiques (41) avec une valeur de seuil dans des moyens de seuil (42) produisant un signal de commande d'interruption (T3) si la condition suivante est satisfaite :

( [ACKN] - [SLPT] ) ≦ [SEUIL]

ledit signal de commande d'interruption étant d'autre part engendré lorsqu'une information de mise à jour d'accusé de réception permise, contenue dans des moyens (43) de mise à jour d'accusé de réception permise , est retombée.

4.  Interface de commande suivant une ou plusieurs des revendications précédentes, dans laquelle il est prévu, dans ladite application (4), une cinquième porte de transmission (36) qui est commandée par ledit signal de commande d'interruption (T3) et qui,lorsqu'elle est bloquée, ne permet pas une mise à jour du pointeur d'accusé de réception contenu dans lesdits premiers moyens d'accusé de réception (16) par le pointeur d'accusé de réception (6b,7b).

5.  Interface de commande suivant une ou plusieurs des revendications précédentes, dans laquelle les transferts de données entre ladite application (4) et lesdits tampons d'entrée (sortie) (2,3) sont commandés par une première porte de transmission (20) à l'intérieur de l'application, et dans laquelle les transferts de données entre ledit contrôleur E/S (8) et les dits tampons sont commandés par une deuxième porte de transmission (30) à l'intérieur du contrôleur E/S.

6.  Interface de commande suivant une ou plusieurs des revendications précédentes, dans laquelle, pour des opérations de transfert de données de sortie, lesdits moyens à l'intérieur de l'application et lesdits moyens à l'intérieur du contrôleur E/S comprennent les moyens suivants :

1. des moyens dépendant dudit premier signal de commande de sortie (XO) pour transférer les données de sortie d'une source de données (14) prévue dans ladite application (4) auxdits tampons de sortie (3) par l'intermédiaire de ladite première porte de transmission (20) et d'une première ligne de données (O1),

2. des moyens prévus dans l'application pour incrémenter la valeur INDEX du pointeur d'index dans les premiers moyens d'index (15), d'une quantité spécifique(V1), et pour transférer la nouvelle valeur par l'intermédiaire d'une troisième porte de transmission (21) et d'une première ligne de commande (O2) au pointeur d'index (6a) dans les pointeurs de sortie (6) et, de là, par l'intermédiaire d'une deuxième ligne de commande (O3), auxdits deuxièmes moyens d'index (25) dans ledit contrôleur E/S (8), et

3. des moyens dépendant dudit deuxième signal de commande de sortie (YO) pour transférer les données de sortie desdits tampons de sortie, par l'intermédiaire d'une deuxième ligne de données (O4) et de ladite deuxième porte de transmission (30), à un récepteur de données (24) dans ledit contrôleur E/S (8).

7. Interface de commande suivant une ou plusieurs des revendications précédentes dans laquelle, pour des opérations de transfert de données d'entrée, les dits moyens à l'intérieur de l'application et lesdits moyens à l'intérieur du contrôleur E/S comprennent les moyens suivants :

1. des moyens dépendant dudit deuxième signal de commande d'entrée (YI) pour transférer les données d'entrée d'une source de données (24) prévue dans ledit controleur E/S (8) auxdits tampons d'entrée (2), par l'intermédiaire de ladite deuxième porte de transmission (30) et d' une troisième ligne de données (I1),

2. des moyens prévus dans le contrôleur E/S pour incrémenter la valeur [ACKN] du pointeur d'accusé de réception dans les deuxièmes moyens d'accusé de réception (26), d'une quantité spécifique (V2), et pour transférer la nouvelle valeur par l'intermédiaire d'une quatrième porte de transmission (31) et d'une troisième ligne de commande (I2) au pointeur d'accusé de réception (7b) dans les pointeurs d'entrée (7) et, de là, par l'intermédiaire d'une quatrième ligne de commande (I3) et de ladite cinquième porte de transmission (36), auxdits deuxièmes moyens d'accusé de réception (16) dans ladite application (4), et

3. des moyens dépendant dudit deuxième signal de commande d'entrée (YI) pour transférer les données d'entrée desdits tampons d'entrée, par l'intermédiaire d'une quatrième ligne de données (I4) et de ladite première porte de transmission (20), à un récepteur de données (14) dans ladite application (4).

8. Interface de commande suivant les revendications ou dans laquelle, pour un transfert de données en duplex intégral, les moyens des revendications 6 et 7 fonctionnent en parallèle dans chacun de deux ensembles des dits mécanismes de transfert de données(des figures 3 et 4).

## Patentansprüche

1. Steuerungsschnittstelle zur Übertragung von Daten zwischen einer Datenverarbeitungseinheit und zumindest einem Eingangs-/Ausgangs- (I/O) Gerät (9) mit einem Eingangs-/Ausgangs- (I/O) Steuerungsgerät (8), welches I/O-Geräte mit der Steuerungsschnittstelle verbindet,

mit einem ersten Vorrat (2) von Puffern (11a-n) zur Pufferung von Daten, welche von einem I/O-Gerät zu einer Anwendung (4) übertragen werden und mit einem zweiten Vorrat (3) von Puffern (12a-n) zur Pufferung von Daten, welche von einer Anwendung zu einem I/O-Gerät übertragen werden,

welche Steuerungsschnittstelle folgendes aufweist:

eine Steuereinheit (1) mit auswärtsgerichteten Zeigermittel (6) zur Steuerung der auswärtsgerichteten Datenübertragung von einer Anwendung zu einem I/O-Gerät, und einwärtsgerichteten Zeigermittel (7) zur Steuerung einer einwärtsgerichteten Datenübertragung von einem I/O-Gerät zu einer Anwendung, wobei beide Zeigermittel einen Indexzeiger [INDEX] (6a, 7a) und einen Bestätigungszetger [ACKN] (6b, 7b) aufweisen, worin die Indexzeiger nur von der Anwendung (4) und die Bestätigungszeiger nur von I/O-Steuerungsgeräten (8) verändert werden können,

in der genannten Anwendung (4) erste Indexmittel (15), welche den Wert [INDEX] des Indexzeigers (6a, 7a) darstellen; erste Bestätigungsmittel (16), welche den Wert [ACKN] des Bestätigungszeigers (6b, 7b) darstellen, und Speichermittel (17), welche eine Zahl MAX BUFFER enthalten, die gleich ist der maximalen Anzahl von Puffern, welche im ersten oder zweiten Vorrat (2, 3) von Puffern verwendet werden können,

im genannten I/O-Steuerungsgerät (8) zweite Indexmittel (25), welche den Wert des Indexzeigers darstellen und zweite Bestätigungsmittel (26), welche den Wert des Bestätigungszeigers (6b, 7b) darstellen,

Mittel (15-19, 21-23, 33, 35) in der Anwendung zur Veränderung des Wertes des Indexzeigers in Übereinstimmung mit der Anzahl von Puffern, welche für die Datenübertragungen verwendet werden, und zur Feststellung dieser Veränderungen zur Entwicklung eines einwärtsgerichteten Steuersignales XI, welches die einwärtsgerichtete Datenübertragung erlaubt, und eines auswärtsgerichteten Steuersignales XO, welches die auswärtsgerichtete Datenübertragung zwischen der Anwendung und dem bezüglichen ersten oder zweiten Vorrat von Puffern erlaubt, wenn die folgenden Bedingungen, die in Modulo N Arithmetik gestellt werden erfüllt sind:

XO wenn ([INDEX] - [ACKN])<[MAX BUFFER]
XI wenn ([INDEX] - [ACKN])<[MAX BUFFER]

Mittel (25, 26, 28, 29, 31, 32, 34, 45) im I/O-Steuerungsgerät zur Veränderung des Wertes des Bestätigungszeigers in Übereinstimmung mit der Anzahl von Puffern welche für die Datenübertragungen verwendet werden und zur Feststellung dieser Veränderungen zur Entwicklung eines einwärtsgerichteten Steuersignales YI welches die einwärtsgerichtete Datenübertragung, und eines auswärtsgerichteten Steuersignales YO, welche die auswärtsgerichtete Datenübertragungen zwischen dem I/O-Steuerungsgerät und dem bezüglichen ersten oder zweiten Vorrat von Puffern erlaubt,

wenn die folgenden weiteren Bedingungen, welche in Modulo N Arithmetik gestellt werden, erfüllt sind:

YO wenn [INDEX]>[ACKN] (Zeiger 6)
YI wenn [INDEX]>[ACKN] (Zeiger 7)

und zur Unterbrechung der einwärts- und/oder auswärtsgerichteten Datenübertragungen, wenn diese Bedingungen nicht erfüllt sind.

2. Steuerungsschnittstelle nach Anspruch 1, worin die genannten Veränderungen durch eine Erhöhung des Indexzeigerwertes (INDEX) durch einen bestimmten Betrag (V1) und des Bestätigungszeigerwertes (ACKN) durch einen bestimmten Betrag (V2) erfolgen, wobei der zuletzt genannte bestimmte Betrag (V2) gleich oder verschieden sein kann mit oder vom zuerstgenannten bestimmten Betrag.

3. Steuerungsschnittstelle nach den Ansprüchen 1 und/oder 2, worin eine Unterbrechungssteuerung (13) vorgesehen ist, welche erste Arithmetikmittel (40) zur Bildung der Differenz zwischen dem genannten Bestätigungszeiger (6b, 7b) und dem Bestätigungszeigerwert in den genannten ersten Bestätigungsmittel (16) aufweist, wobei der zuletzt genannte Bestätigungszeigerwert als "schlafender Zeiger" (SLPT) betrachtet werden kann, da er nicht bei verfehlten Datenübertragungen des I/O-Steuerungsgerätes aktualisiert wird, wobei die genannte Differenz durch zweite logische Mittel (41) verglichen wird mit einem Schwellenwert (THRESHOLD) in Schwellenwertmittel (42), die ein Unterbrechungs-Steuersignal (T3) erzeugen, wenn die folgende Bedingung erfüllt ist:

([ACKN]-[SLPT]) ≤ [THRESHOLD],

wobei das genannte Unterbrechungssteuersignal alternativ erzeugt wird, wenn eine Bestätigungsaktualisierungs-Erlaubnisinformation, die in den Bestätigungsaktualisierungs-Erlaubnismittel (43) enthalten ist, fallengelassen wird.

4. Steuerungsschnittstelle nach einem oder mehreren der vorangehenden Ansprüche, worin in der genannten Anwendung (4) ein fünftes Übertragungstor (36) vorgesehen ist, welches vom genannten Unterbrechungssteuersignal (T3) gesteuert wird und das, wenn es geschlossen ist, die Aktualisierung des Bestätigungszeigers, der in den genannten ersten Bestätigungsmittel (16) enthalten ist, durch den Bestätigungszeiger (6b, 7b) nicht gestattet.

5. Steuerungsschnittstelle nach einem oder mehreren der vorangehenden Ansprüche, worin Datenübertragungen zwischen der Anwendung (4) und den genannten einwärtsgerichteten/auswärtsgerichteten Puffern (2, 3) durch ein erstes Übertragungstor (20) in der Anwendung gesteuert werden und worin Datenübertragungen zwischen den genannten I/O-Steuerungsgeräten (8) und den genannten Puffern durch ein zweites Übertragungstor (30) im I/O-Steuerungsgerät gesteuert werden.

6. Steuerungsschnittstelle nach einem oder mehreren der vorangehenden Ansprüchen worin für auswärtsgerichtete Datenübertragungsoperationen die genannten Mittel innerhalb der Anwendung und die genannten Mittel innerhalb des I/O-Steuerungsgerätes folgendes aufweisen:

1. Mittel, welche von dem genannten ersten auswärtsgerichteten Steuersignal (XO) abhängen und auswärtsgerichtete Daten von einer Datenquelle (14) innerhalb der genannten Anwendung (4) zu den genannten auswärtsgerichteten Puffern (3) über das genannte erste Übertragungstor (20) und eine erste Datenleitung (O1) übertragen,

2. Mittel in der Anwendung zur Erhöhung des Wertes INDEX des Indexzeigers in den ersten Indexmittel (15) durch einen bestimmten Betrag (V1) und zur Übertragung des neuen Wertes über ein drittes Übertragungstor (21) und eine erste Steuerleitung (O2) zum Indexzeiger (6a) innerhalb der auswärtsgerichteten Zeiger (6) und von dort über eine zweite Steuerleitung (O3) zu den genannten Indexmittel (25) innerhalb des genannten I/O-Steuerungsgerätes (8), und

3. Mittel, welche vom genannten zweiten auswärtsgerichteten Steuersignal (YO) abhängen und die auswärtsgerichteten Daten von den genannten auswärtsgerichteten Puffern über ein zweite Datenleitung (O4) und das genannte zweite Übertragungstor (30) zu einem Datenbestimmungsort (24) innerhalb des genannten I/O-Steuerungsgerätes (8) übertragen.

7. Steuerungsschnittstelle nach einem oder mehreren der vorangehenden Ansprüche worin für einwärtsgerichtete Datenübertragungsoperationen die genannten Mittel innerhalb der Anwendung und die genannten Mittel innerhalb des I/O-Steuerungsgerätes folgendes aufweisen:

1. Mittel, welche vom genannten zweiten einwärtsgerichteten Steuersignal (Y1) abhängen und die einwärtsgerichteten Daten von einer Datenquelle (24) innerhalb des genannten I/O-Steuerungsgerätes (8) zu den genannten einwärtsgerichteten Puffern (2) über das zweite genannte Übertragungstor (30) und eine dritte Datenleitung (I1) übertragen.

2. Mittel im I/O-Steuerungsgerät zur Erhöhung des Wertes [ACKN] des Bestätigungszeigers in den zweiten Bestätigungsmittel (26) durch einen bestimmten Betrag (V2) und zur Übertragung des neuen Wertes über ein viertes Übertragungstor (31) und eine dritte Steuerleitung (12) zum Bestätigungszeiger (7b) innerhalb der einwärtsgerichteten Zeiger (7) und von dort über eine vierte Steuerleitung (13) und das genannte fünfte Übertragungstor (36) zu den genannten zweiten Bestätigungsmittel (16) innerhalb der Anwendung, und

3. Mittel, welche vom genannten zweiten einwärtsgerichteten Steuersignal (YI) abhängen und die einwärtsgerichteten Daten von den genannten einwärtsgerichteten Puffern über ein vierte Datenleitung (I4) und das genannte erste Übertragungstor (20) zu einem Datenbestimmungsort (14) innerhalb der genannten Anwendung (4) übertragen.

8. Steuerungsschnittstelle nach vorhergehenden Ansprüchen, worin zur Erzielung einer Voll-Duplex-Datenübertragung die Mittel der Ansprüche 6 und 7 in jedem von zwei Sätzen der genannten Datenübertragungsmechanismen (Fig. 3 und 4) parallel arbeiten.

FIG. 1

FIG. 2

FIG. 3

FIG.4

DATA SINK 14

INDEX 15

G 18

+V₁ 19

ACKN 16

MAX BUFFER 17

Z1

SUB 23

G 36

G 20

G 21

Δt 22

XI"

XI'

33 T1

G

COMP 35

XI

4

I4

I5

INDEX 7a 7

I6

INBOUND BUFFERS 2

ADR 5

27

ACKN 7b

I3

39

37

38

13

I1

I2

8

G 30

G 31

32

Δt

G 34 T2

INDEX 25

YI

YI'

COMP 45

DATA SOURCE 24

26

ACKN

28 G

+V₂ 29

YI

Z2

9

FIG.5

INBOUND

FIG. 6 a

FIG. 6 b

23

FIG. 6 c

STEP: 1, 2, 3, 4, 5, 6

YI
T2
YI'
YI''
XI
T1
XI'
XI''
T3
43

Δt    Δt    Δt

UNDEFINED

START 1. DATA TRANSFER

1. DATA IN INB. BUFF. 2

NEW PTR IN ACKN 7b

START 2. DATA TRANSFER

2. DATA IN INB. BUFF. 2

ALL DATA IN DATA SINK 14, NEW PTR IN ACKN 7b, 16

NEW PTR IN INDEX 7a, 25

EP 0 267 974 B1